# EUROPEAN PATENT APPLICATION

(11) **EP 1 821 179 A2**
(43) Date of publication of application: **22.08.2007**
(21) Application number: 07075072.4
(22) Date of filing: 29.01.2007
(51) Int. Cl.: G06F 3/023, H04M 1/26, H04M 1/2745

(54) **Alphanumeric data processing in a telephone**

(30) Priority: 21.02.2006 US 358236
(71) Applicant: Delphi Technologies, Inc., Troy, Michigan 48007 (US)
(72) Inventor: Wagner, Paul T., Kokomo, IN 46902 (US); Toms, Mona L., Carmel, IN 46032 (US); Croyle, Steven R., Franklin, MI 48025 (US)
(74) Representative: Denton, Michael John

(57) **Abstract**

A method (300) of processing alphanumeric data entered by a human user into a telephone, using a plurality of numerical keys each assigned a unique numeral and a plurality of alphabetical keys each assigned a unique alphabetical letter. A numerical entry is processed by receiving (302) a numerical input data based on an activation of one of the plurality of numerical keys, associating (304) the numerical input data with a counterpart numerical output data, and using (306) the counterpart numerical output data. An alphabetical entry is processed by receiving (308) an alphabetical input data based on an activation of one of the alphabetical keys, associating (310) the alphabetical input data with a pre-assigned numerical output data, and using (312) the pre-assigned numerical output data.

## Description

### TECHNICAL FIELD

This invention relates generally to telecommunications devices and, more particularly, to a method of processing alphanumeric data entered into a telephone.

### BACKGROUND OF THE INVENTION

A typical telephone keypad includes a three-by-four matrix of buttons marked with numerals 1 through 9, * (asterisk), numeral 0, and # (pound). Each of the buttons marked with numerals 2 through 9 include several tiny lowercase alphabetical letters marked thereon. For example, the numeral 2 button includes the letters abc and the numeral 9 button includes the letters wxyz. Accordingly, many businesses advertise their telephone numbers using alphanumeric mnemonics, in which at least part of a telephone "number" is specified using letters or words. For example, the telephone number 1-800-225-5288 is advertised as alphanumeric mnemonic 1-800-CALL-ATT^{®}.

Although use of such an alphanumeric mnemonic may make a "number" easier to remember, telephone users may find it inconvenient to enter the mnemonic into their telephone. For example, a user must convert the letters into numerals by searching the telephone keypad for each correct letter among three or four tiny letters on each of numbered buttons 2 through 9. Thus, telephone users may find that this process involves interacting with an unfamiliar and infrequently used alphanumeric format, and is thus time consuming, visually unfamiliar, and complex.

### SUMMARY OF THE INVENTION

A method of processing alphanumeric data entered by a human user into a telecommunications device, using a plurality of numerical keys each assigned a unique numeral and a plurality of alphabetical keys each assigned a unique alphabetical letter. The method includes the steps of processing a numerical entry and an alphabetical entry. The numerical entry is processed by receiving a numerical input data based on an activation of one of the plurality of numerical keys, associating the numerical input data with a counterpart numerical output data, and using the counterpart numerical output data. The alphabetical entry is processed by receiving an alphabetical input data based on an activation of one of the alphabetical keys, associating the alphabetical input data with a pre-assigned numerical output data, and using the pre-assigned numerical output data.

According to preferred method aspects, the keys are buttons of the telephone such as graphical and/or mechanical buttons, and the numerical output data may be transferred to a display and memory for viewing and saving of a telephone number, and transmitted via a transmitter for dialing the telephone number.

### BRIEF DESCRIPTION OF THE DRAWINGS

Figure 1 illustrates an external portion of one exemplary device that may be used in implementing a method of processing alphanumeric data;
Figure 2 illustrates an external portion of another exemplary device that may be used in implementing the method of processing alphanumeric data;
Figure 3 illustrates an exemplary computing device that may be used in implementing the method of processing alphanumeric data; and
Figure 4 is a flow chart of the method of processing alphanumeric data.

### DESCRIPTION OF THE PREFERRED EMBODIMENTS

### A) Apparatus

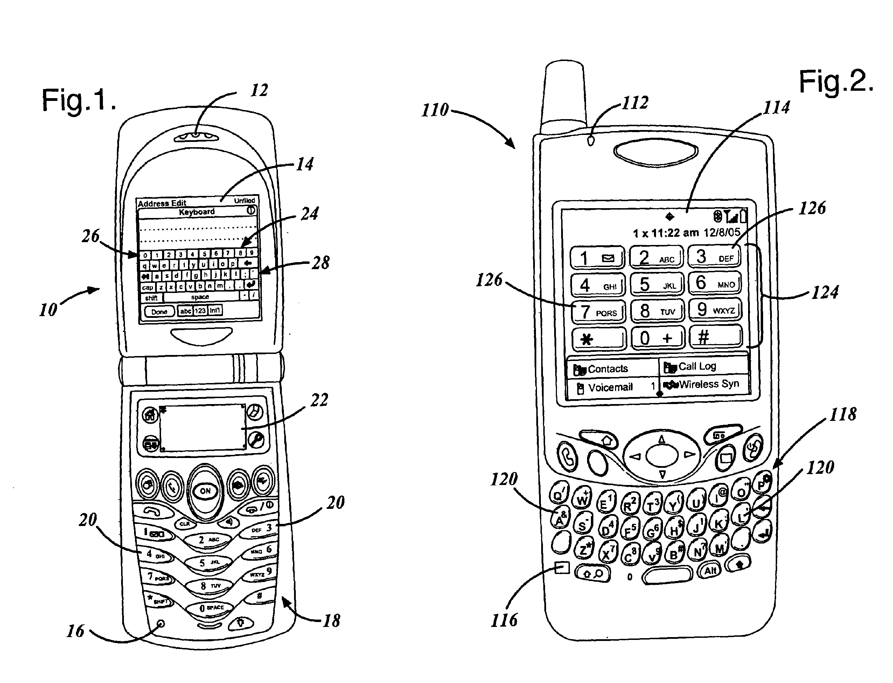

Referring now to Figure 1, an exemplary telecommunications device is illustrated such as a telephone 10. As used herein, telecommunications device includes any device in communication with a telecommunications device. The telephone 10 includes input devices and output devices for communication with a telephone user. The output devices convey data to the telephone user, and may include a speaker 12 for providing audible feedback, a video touchscreen 14 for providing visual feedback, or any other suitable devices.

The input devices accept entry of data from the telephone user, and may include a microphone 16 for accepting voice data, a numerical keypad 18 for accepting text data by numbered mechanical buttons 20 each having a single numeral as primary indicia and three or four letters as secondary indicia, a touch sensitive tablet 22 for accepting text data by finger or stylus, the video touchscreen 14 for accepting text data by finger or stylus, or other suitable input devices. Those of ordinary skill in the art will recognize that the touch sensitive tablet 22 may be used to accept numerical and alphabetical textual data by writing numerals and letters thereon with a finger or stylus (not shown).

The touchscreen 14 is preferably configured to display a video keyboard 24 including graphical buttons identified by numerals (e.g. 0 to 9) 26, and graphical buttons identified by alphabetical letters (e.g. a to z) 28. The video keyboard 24 may be in the familiar "QWERTY" format, in an alphabetically sequential (a-b-c-d...) format, or in any other familiar format. The letters 28 may include letters from the Latin, Greek, Hebrew, Arabic, Cyrillic, Korean, Chinese, or Japanese alphabets, or any other conceivable alphabet. The video keyboard 24 may thus be used to accept numerical and alphabetical textual data by touching the numerals 26 and letters 28 with a finger or a stylus (not shown).

Figure 2 illustrates another presently preferred embodiment of a telephone 110. This embodiment is similar in many respects to the embodiment of Figure 1 and common subject matter may generally not be repeated hereafter. The telephone 110 includes input devices and output devices for communication with a telephone user. The output devices convey data to the telephone user, and may include a speaker 112 for providing audible feedback, a video touchscreen 114 for providing visual feedback, or any other suitable devices.

The input devices accept entry of data from the telephone user, and may include a microphone 116 for accepting voice data, an alphabetical keyboard 118 for accepting text data by mechanical buttons 120, the video touchscreen 114 for accepting text data by finger or stylus, or other suitable input devices. The keyboard 118 may be in the familiar "QWERTY" format, in an alphabetically sequential (a-b-c-d...) format, or in any other familiar format, and may include numerals as secondary indicia. As shown, the touchscreen 114 is preferably configured to display a video keypad 124 including graphical buttons identified by numerals (e.g. 0 to 9) 126. The video keypad 124 may thus be used to accept numerical text data by touching the numerals with a finger or a stylus (not shown).

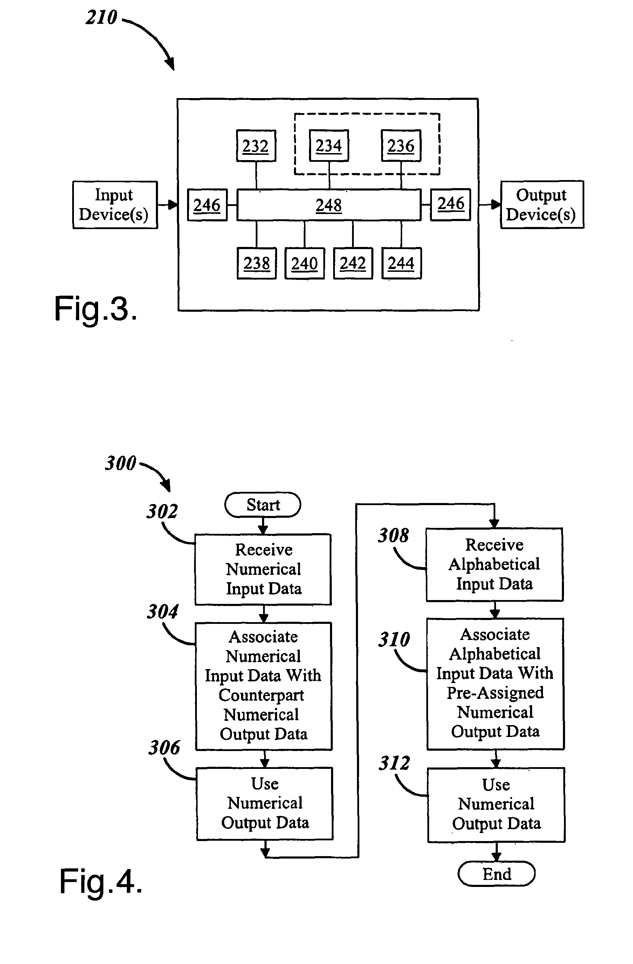

The telephones 10, 110 may also include a computing device 210 illustrated in block diagram form in Figure 3. The computing device 210 may include suitable input and output devices as described above and may also have at least one of any of the following devices in communication therewith: an antenna 232, a transmitter 234 and a receiver 236 (or a transceiver 234,236), a processor 238, a memory 240, a battery 242, a signal processor 244, input/output communication devices 246, an internal communication device 248 suitably electrically communicating the aforementioned elements, and/or other like telephone components.

Alternatively, the computing device 210 may be remotely located from the telephone 10, 110 and may reside in a separate system that interfaces with the telephone 10, 110 by hardwire or wireless connection such as Bluetooth. In this alternative configuration, the input and output devices, processor, etc. would reside on this separate system. The separate system is adapted to send dial commands to the phone 10, 110 with an already-converted alpha-to-numeric-only phone number.

The exemplary method described herein below may be deployed on the exemplary computing device 210 described herein that includes the processor 238 configured to execute control logic or algorithms stored in memory 240 that provide the method functionality of the computing device 210. In this respect, the processor 238 is powered by the battery 242 and may initially operate on instructions stored in its own internal memory. The processor 238 may receive commands or data from a telephone user or another processor through the suitable input devices and/or interfaces, and may receive, process, and store data or instructions from various storage media including the memory 240 described herein, and the processor 238 outputs data or instructions to one or more of the other system components described herein. The processor 238 may be programmed to carry out computer-executable instructions, such as those associated with or embedded in software or computer programs such as operating systems, application programs, and the like.

Accordingly, the processor 238 may encompass one or more processing units, controllers, microprocessors, micro-controllers, discrete logic circuits having logic gates for implementing logic functions upon data signals, application specific integrated circuits (ASIC) with suitable logic gates, complex programmable logic devices (CPLD), programmable or field-programmable gate arrays (PGA/FPGA), any combinations of the aforementioned, and the like. As used herein, the processor 238 is also considered to include any ancillary devices such as clocks, power supplies, and the like.

The memory 240 may include computer readable storage or media in the form of removable and/or non-removable, volatile memory and/or non-volatile memory and may be used to store any data such as operating systems, program code or operating software, device drivers, user instructions, voice recognition data or programs, or the like. Exemplary volatile memory may include random access memory (RAM), static RAM (SRAM), dynamic RAM (DRAM), and the like, for running software and data on the processor 238. RAM typically contains data and/or program modules that are immediately accessible to and/or presently being operated on by the processor 238. By way of example, and not limitation, the volatile memory may include an operating system, application programs, other memory modules, and data. Exemplary non-volatile memory may include read only memory (ROM), erasable programmable ROM (EPROM), electrically erasable programmable ROM (EEPROM), dynamic read/write memory like magnetic or optical disks or tapes, and static read/write memory like flash memory, for storing software and data.

The memory 240 enables storage and communication of data, data structures, and computer programs or software that may include executable instructions for implementing logical functions and can be embodied in any computer-readable medium for use by or in connection with the processor 238, which can retrieve and execute the instructions. The software may include, but is not limited to routines, modules, objects, components, data structures, and the like, for performing particular tasks and/or implementing particular abstract data types. Computer programs may exist in a variety of forms both active and inactive. General examples include software programs comprised of instructions in source code, object code, executable code or other formats; firmware programs; or hardware description language (HDL) files; and the like. Specific examples include assembler, C, C++ objects, Visual Basic, Visual C++, XML, Java, and Microsoft® Foundation Classes, and the like.

### B) Method

Referring now to Figure 4, a method 300 of processing alphanumeric data may be carried out using any suitable device or hardware and, as an example only, may be carried out using the telephone equipment described above. The method 300 includes processing alphanumeric data entered by a human user into a telecommunications device, using a plurality of numerical keys and a plurality of alphabetical keys. A unique numeral is assigned to each of the plurality of numerical keys and a unique alphabetical letter is assigned to each of the plurality of alphabetical keys. As used herein, the terminology alphanumeric keys and data also includes symbolic keys and data such as the asterisk * and pound # keys and symbols.

The keys may include, for example, manual or vocal input keys. Those of ordinary skill in the art will recognize that manual input keys may include mechanical buttons and/or graphical buttons such as those described above, and that vocal input keys may include voice commands associated with voice recognition technology, which may be suitably deployed in a telephone. The voice commands may be vocalizations of single letters, syllables, and/or entire words. Voice recognition technology may be deployed using, for example, the speaker 12, 112, microphone 16, 116, processor 238, and memory 240 loaded with suitable voice recognition software, which is increasingly available on telephones as a standard item.

The method 300 also includes the steps of processing entries of numerical and alphabetical data. As shown at step 302, a numerical entry is first processed by receiving a numerical input data based on an activation of one of the plurality of numerical keys. For example, the receiving step may include receiving keyboard or keypad input, touchscreen input, and/or human voice input. More specifically, a single numerical entry may occur when a telephone user presses one of the mechanical buttons 20 of the keypad 18 of the telephone 10 of Figure 1, writes a numeral on the tablet 22 of the telephone of 10, touches one of the graphical buttons 26 of the video keyboard 24 of the telephone 10, touches one of the graphical buttons 126 of the video keypad 124 of the telephone 110 of Figure 2, presses one of the numbered mechanical buttons 120 of the keyboard 118 of the telephone 110, or speaks a numeral into one of the microphones 16, 116 of one of the telephones 10, 110. Those of ordinary skill in the art will recognize that such actions will generate a suitably associated numerical input signal, which may be received by the processor 238 and processed as numerical input data.

Then, as shown at step 304, the numerical input data may be associated by the processor 238 with a counterpart numerical output data stored in memory 240. For example, Table A, shown below, illustrates a representation of an exemplary look up table, which may be stored in memory 240 and accessed by the processor 238 to associate the numerical input data with its unique counterpart numerical output data. As used herein, the terminology numerical data includes symbolic data such as the asterisk * and the pound # symbols. Thus, those of ordinary skill in the art will recognize that symbolic input data will be associated with its unique counterpart symbolic output data and processed in a similar manner as the numerical data.

**TABLE A**

| **Numerical Input Data** | **Counterpart Numerical Output** |
|---|---|
| 1 | 1 |
| 2 | 2 |
| 3 | 3 |
| 4 | 4 |
| 5 | 5 |
| 6 | 6 |
| 7 | 7 |
| 8 | 8 |
| 9 | 9 |
| 0 | 0 |

Thereafter, as shown at step 306, the numerical output data associated with the numerical input data may be used for any suitable purpose. For example, the numerical output data may be transferred such as to a display for visual feedback of a telephone number, and/or to memory for saving the data as part of a telephone number for an electronic address book of the telephone, and/or may be transmitted via a transmitter for dialing a telephone number.

As shown at step 308, an alphabetical entry is first processed by receiving an alphabetical input data based on an activation of one of the plurality of alphabetical keys. For example, the receiving step may include receiving keyboard or keypad input, touchscreen input, and/or human voice input. More specifically, a single alphabetical entry occurs when a telephone user touches one of the graphical buttons 28 of the video keyboard 24 of the telephone 10 of Figure 1, writes an alphabetical letter on the tablet 22 of the telephone 10, presses one of the mechanical buttons 120 of the keyboard 118 of the telephone 110 of Figure 2, or speaks a letter, syllable, and/or entire word into one of the microphones 16, 116 of one of the telephones 10, 110. Those of ordinary skill in the art will recognize that such actions generate a suitably associated alphabetical input signal, which may be received by the processor 238 and processed as alphabetical input data.

Then, as shown at step 310, the alphabetical input data may be associated by the processor 238 with a pre-assigned numerical output data. For example, Table B, shown below, illustrates a representation of an exemplary look up table, which may be stored in memory 240 and accessed by the processor 238 to associate the alphabetical input data (in uppercase or lowercase form) with its unique pre-assigned numerical output data.

**TABLE B**

| **Alphabetical Input Data** | **Pre-Assigned Numerical Output** |
|---|---|
| A, a | 2 |
| B, b | 2 |
| C, c | 2 |
| D, d | 3 |
| E, e | 3 |
| F, f | 3 |
| G, g | 4 |
| H, h | 4 |
| I, i | 4 |
| J, j | 5 |
| K, k | 5 |
| L, 1 | 5 |
| M, m | 6 |
| N, n | 6 |
| O,o | 6 |
| P, p | 7 |
| Q, q | 7 (or 1) |
| R, r | 7 |
| S,s | 7 |
| T, t | 8 |
| U, u | 8 |
| V, v | 8 |
| W, w | 9 |
| X, x | 9 |
| Y, y | 9 |
| Z, z | 9 (or 1) |

In the case of vocal alphabetical input data such as a vocalized syllable or word, the corresponding pre-assigned numerical output data may be one or more numerals. For example, if the vocalized word is "CALL" then the corresponding pre-assigned numerical output data may be 2255. Suitable voice recognition software is preferably employed to interpret words and syllables as well as letters.

Thereafter, as shown at step 312, the numerical output data associated with the alphabetical input data may be used for any suitable purpose. For example, the numerical output data may be transferred such as to a display for visual feedback of a telephone number, and/or to memory for saving the data as part of a telephone number for telephone address book, and/or may be transmitted via a transmitter for dialing a telephone number.

Those of ordinary skill in the art will recognize that the process flow of steps 302 through 306 can be intermixed with the process flow of steps 308 through 313 to deal with a mnemonic having interlaced numerals and letters such as 1-800-CASH4ME. In other words, the method 300 may be carried out in any suitable sequence to process a variety of alphanumeric data.

Those of ordinary skill in the art will appreciate that the above-described method enables a telephone user to enter an alphanumeric mnemonic manually or vocally, and without ever having to personally convert the mnemonic to a numeric only format by several times over searching for one among a plurality of tiny letters shared by a single key. Rather, the user merely uses their own voice, or a familiar keyboard layout, to quickly input letters and the telephone itself automatically converts the letters of the mnemonic into the numeric only format. Thus, telephone users may find the method to be efficient, visually familiar, and simple, compared to current techniques.

It will be readily understood by those persons skilled in the art that the present invention is susceptible of broad utility and application. Many embodiments and adaptations of the present invention other than those described above, as well as many variations, modifications and equivalent arrangements, will be apparent from or reasonably suggested by the present invention and the foregoing description, without departing from the substance or scope of the present invention. Accordingly, while the present invention has been described herein in detail in relation to its preferred embodiments, it is to be understood that this disclosure is only illustrative and exemplary of the present invention and is made merely for purposes of providing a full and enabling disclosure of the invention. The foregoing disclosure is not intended or to be construed to limit the present invention or otherwise to exclude any such other embodiments, adaptations, variations, modifications and equivalent arrangements, the present invention being limited only by the following claims and the equivalents thereof.

## Claims

1. A method (300) of processing alphanumeric data entered by a human user into a telephone using a plurality of numerical keys each assigned a unique numeral and a plurality of alphabetical keys each assigned a unique alphabetical letter, comprising the steps of:
processing a numerical entry by receiving (302) a numerical input data based on an activation of one of the plurality of numerical keys, associating (304) the numerical input data with a counterpart numerical output data, and using (306) the counterpart numerical output data; and
processing an alphabetical entry by receiving (308) an alphabetical input data based on an activation of one of the alphabetical keys, associating (310) the alphabetical input data with a pre-assigned numerical output data, and using (312) the pre-assigned numerical output data.

2. The method of claim 1, wherein the using steps includes transferring the numerical output data to a display for visual feedback of a telephone number.

3. The method of claim 1, wherein the using steps include transferring the numerical output data to memory for saving the data as part of a telephone number.

4. The method of claim 1, wherein the using steps include transmitting the numerical output data via a transmitter for dialing a telephone number.

5. The method of claim 1, wherein the keys include mechanical buttons and the receiving steps include receiving keyboard input.

6. The method of claim 1, wherein the keys include graphical buttons and the receiving steps include receiving touchscreen input.

7. The method of claim 1, wherein the keys include voice commands and the receiving steps include receiving human voice input.

8. The method of claim 1, wherein the associating steps include using look up tables stored in memory to reference the numerical output data based on the numerical and alphabetical input data.

9. The method of claim 1, wherein the using steps include transferring the numerical output data to a display for visual feedback of a telephone number, transferring the numerical output data to memory for saving the numerical output data as part of a telephone number, and transmitting the numerical output data via a transmitter for dialing a telephone number.

10. The method of claim 9, wherein the keys include graphical buttons and the receiving steps include receiving touchscreen input, and wherein the associating steps include using look up tables stored in memory to reference the numerical output data based on the numerical and alphabetical input data.
